# EUROPÄISCHE PATENTSCHRIFT

(11) **EP 3 921 534 B1**
(45) Veröffentlichungstag und Bekanntmachung des Hinweises auf die Patenterteilung: **01.04.2026**
(21) Anmeldenummer: 20704484.3
(22) Anmeldetag: 05.02.2020
(51) Int. Cl.: F02M 53/04, F02M 61/16, F16L 17/06

(54) **DICHTHÜLSE UND DICHTANORDNUNG MIT DICHTHÜLSE**
SEALING SLEEVE AND SEALING ARRANGEMENT HAVING SEALING SLEEVE
MANCHON D'ÉTANCHÉITÉ ET DISPOSITIF D'ÉTANCHÉITÉ POURVU D'UN MANCHON D'ÉTANCHÉITÉ

(30) Priorität: 11.02.2019 DE 102019103351
(43) Veröffentlichungstag der Anmeldung: 15.12.2021
(73) Patentinhaber: Liebherr-Components Deggendorf GmbH, 94469 Deggendorf (DE)
(72) Erfinder: HÖLLBACHER, Markus, 5412 Puch (AT); SCHMID, Fabian, 94469 Deggendorf (DE)
(74) Vertreter: Lorenz Seidler Gossel Part. mbB
(86) Internationale Anmeldenummer: PCT/EP2020/052886
(87) Internationale Veröffentlichungsnummer: WO 2020/164999

(56) Entgegenhaltungen:
- WO-A1-2016/122829
- JP-A- H05 149 208
- JP-A- S57 193 765
- US-A1- 2011 315 118
- US-A1- 2013 256 241
- US-A1- 2015 369 176

## Beschreibung

Die vorliegende Erfindung betrifft eine Dichthülse sowie eine mit der Dichthülse versehene Dichtanordnung. Insbesondere betrifft die vorliegende Erfindung einen zu kühlenden Kraftstoffinjektor, der mit einer solchen Dichthülse versehen ist bzw. zusammenwirkt.

Nach dem Stand der Technik gibt es eine Vielzahl von Lösungen zum Abdichten einer Kühlfluidleitung. Insbesondere bei Kühlfluidleitungen, die in einem länglichen Körper verlaufen und deren Zu- und Ablauf an der Mantelfläche des länglichen Körpers angeordnet ist, ist der jeweilige Zu- und Ablaufbereich des zu kühlenden Körpers mit den Kühlfluidleitungen durch mehrere Dichtringe getrennt. Dabei ist es oftmals gefordert, dass die Zulaufleitung und die Ablaufleitung eines Kühlfluids, die in bzw. aus dem zu kühlenden Körper geführt sind, voneinander fluidisch getrennt sind, damit es zu einem effektiven Abtransport bzw. Einleiten des unterschiedlich temperierten Kühlfluids kommt.

Dabei werden zur axialen Positionierung der Dichtringe Nuten in der zu kühlenden Komponente oder der dazu gegenüberliegenden Komponente benötigt, welche gemeinsam den erforderlichen Einbauraum definieren.

Weiterhin ist es nach dem Stand der Technik erforderlich, dass der Zulaufbereich durch mindestens zwei O-Ringe begrenzt wird, wodurch jedoch eine um den gesamten Umfang des länglichen Körpers verlaufende Fluidverbindung des Zulaufbereichs zwischen der zu kühlenden Komponente und dem Einbauraum der zu kühlenden Komponente entsteht. Selbiges gilt dabei auch für den Ablaufbereich, so dass es zwingend erforderlich ist, den Zulaufbereich und den Ablaufbereich der Kühlfluidleitung des länglichen Körpers in der Längsrichtung zueinander versetzt anzuordnen. Auch dies führt zu einem relativ großvolumigen Einbauraum der Abdichtung.

Ist zudem eine Filterung des Kühlfluids gewünscht, erfolgt diese über separate Filter vor den Dichtringen und den zu kühlenden Komponenten, was wiederum den erforderlichen Bauraum erweitert und die Anzahl an notwendigen Komponenten erhöht.

Insgesamt ergibt sich nach dem Stand der Technik ein hohes Fehlerpotenzial aufgrund der mehreren Dichtringe und Nuten und der hieraus entstehenden großen Anzahl an unterschiedlichen Dichtbereichen sowie der dafür notwendigen Komponenten.

Die US 2013/0256241 A1 offenbart einen koaxialen Doppelfilter mit einem integrierten Filterträger, der zum Filtern von Blut oder dergleichen dient.

Aus der JP H05 149 208 ist ein Filterelement eines Einspritzventils bekannt, das dazu dient, Kraftstoff auf dem Weg hin zum Brennraum zu filtern.

Die US 2015/369176 A1 zeigt ebenfalls ein Filterelement eines Kraftstoff-Einspritzventils, dass den Kraftstoff auf dem Weg hin zum Brennraum filtert.

Die US 2011/0315118 A1 zeit eine Dichtanordnung mit den Merkmalen aus dem Oberbegriff des Anspruchs 1.

Es ist das Ziel der vorliegenden Erfindung die vorstehend aufgeführten Nachteile abzumildern oder zu überwinden und eine verbesserte Dichthülse im Rahmen einer Dichtanordnung zu schaffen, die weniger Bauraum einnimmt, dabei gleichzeitig weniger störanfällig ist und zudem nur eine sehr geringe Anzahl an erforderlichen Bauteilen umfasst. Eine solche Dichthülse führt aufgrund des damit einhergehenden verringerten Fertigungsaufwands gleichzeitig auch zu reduzierten Herstellungskosten.

Die Ziele der vorliegenden Erfindung werden mit einer Dichtanordnung, die sämtliche Merkmale aus dem Anspruch 1 aufweist erlangt. Weiter vorteilhafte Ausgestaltungen sind in den abhängigen Ansprüchen dargelegt.

Demnach umfasst die erfindungsgemäße Dichtanordnung unter anderem eine Dichthülse zum separierten Zu- und Abführen eines Kühlmediums, einen Hülsenkörper, der um seine Längsachse drehsymmetrisch ist, eine zur Längsachse radial nach außen abstehende Abkragung am oberen Längsende des Hülsenkörpers, eine zur Längsachse radial nach außen abstehende Abkragung am unteren Längsende des Hülsenkörpers, einen ersten und einen zweiten Stegabschnitt, von denen jeder in Axialrichtung des Hülsenkörpers verläuft und die obere Abkragung mit der unteren Abkragung verbindet, und einen ersten und einen zweiten Wandungsbereich, von denen jeder in axialer Richtung durch die obere und untere Abkragung und in Umfangsrichtung durch den ersten und zweiten Stegabschnitt begrenzt ist und gegenüber diesen Elementen radial nach innen abgesetzt ist, wobei die obere Abkragung und die untere Abkragung jeweils durchgehend um den gesamten Umfang des Hülsenkörpers verlaufen und dessen maximale radiale Ausdehnung definieren, und der erste Wandungsbereich und der zweite Wandungsbereich jeweils mindestens einen radial verlaufenden Durchgangskanal aufweist, um ein Kühlmedium radial zuzuführen oder abzuführen.

Nach der Erfindung ist vorgesehen, dass die Dichtanordnung ferner einen zu kühlenden Körper umfasst, der sich durch das Innere der Dichthülse hindurch erstreckt und einen ersten Kühlfluidkanal und einen zweiten Kühlfluidkanal aufweist, wobei die Dichthülse an dem zu kühlenden Körper so angeordnet ist, dass eine Öffnung des ersten Kühlfluidkanals von dem ersten Wandungsbereich und eine Öffnung des zweiten Kühlfluidkanals von dem zweiten Wandungsbereich überdeckt ist.

Es ist also eine Dichthülse geschaffen, deren Wandungsbereiche gegenüber der unteren und der oberen Abkragung sowie den in Längsrichtung verlaufenden Stegabschnitten radial nach innen zurückversetzt ist. Die Wandungsbereiche sind also in Radialrichtung gesehen nach innen stufenartig zurückversetzt, so dass die beiden Wandungsbereiche durch die Stegabschnitt voneinander getrennt sind.

Dadurch können bei einem Anlegen einer Außenhülse, welche die Dichthülse in Umfangsrichtung umgibt und den nach außen abstehenden Stegabschnitt bzw. die Abkragungen kontaktiert, Kammern gebildet werden, die zum Zuführen und Abführen eines Kühlfluids nutzbar sind. Besonders vorteilhaft ist an der Ausgestaltung der Dichthülse, dass beide Kammern auf gleicher Höhe in Axialrichtung des Hülsenkörpers anordenbar, jedoch an verschiedenen Umfangsbereichen der Hülse vorgesehen sind. Damit lässt sich oftmals knapper Bauraum besonders effizient nutzen.

Von der Erfindung ist selbstverständlich auch der Fall umfasst, dass es mehr als zwei Stegabschnitte gibt, was das Vorhandensein von mehr als zwei Wandungsbereichen zur Folge hätte. Das zugrundeliegende Prinzip der Erfindung wird aber im Folgenden anhand von zwei Stegabschnitten erzählt, wobei das Vorhandensein von mehr als zwei Stegabschnitten ebenfalls von der Erfindung umfasst ist.

Nach der Erfindung ist vorgesehen, dass der erste und der zweite Stegabschnitt an ihren radial äußeren Seiten jeweils stufenfrei in die obere und untere Abkragung übergehen. Dadurch wird eine vorteilhafte Ausgestaltung erreicht, da eine Abdichtung des Außenumfangs der Dichthülse leicht zu bewerkstelligen ist.

Jeder Wandungsbereich ist demnach an seinen seitlichen Außenkanten von einem radial nach außen vorspringenden Stegabschnitt und an seinen oberen und unteren Kanten durch die radial nach außen vorspringende Abkragung eingefasst.

Der Durchgangskanal, der in dem Wandungsbereich angeordnet ist, ist eine Durchbrechung des Wandungsbereichs in Radialrichtung, so dass eine Strömung eines Kühlfluids von der radialen Innenseite der Dichthülse hin zu dessen Außenseite oder umgekehrt stattfinden kann.

Nach einer weiteren optionalen Modifikation der Erfindung ist vorgesehen, dass die obere Abkragung und die untere Abkragung identisch ausgebildet sind und jeweils die maximale radiale Ausdehnung über den gesamten Umfang des Dichtkörpers definieren. Zudem kann vorgesehen sein, dass die beiden Abkragungen keinen gegenseitigen Versatz in der Umfangsrichtung zueinander haben, also bei einer Projektion entlang der Längsachse des Hülsenkörpers vollständig aufeinander liegen.

Dichthülse nach einem der vorhergehenden Ansprüche, wobei die obere Abkragung und die untere Abkragung ferner jeweils einen gegenüber den Wandungsbereichen radial nach innen ragenden Abschnitt aufweist.

Weiter kann auch vorgesehen sein, dass die Stegabschnitte in Umfangsrichtung des Düsenkörpers äquidistant voneinander beabstandet sind, also bei Vorhandensein von lediglich zwei Stegabschnitten einander gegenüberliegen und einen Abstand von π (im Bogenmaß, bzw. 180° im Gradmaß) voneinander haben. Allgemein lässt sich über den Abstand in Umfangsrichtung sagen, dass bei der Anzahl von n Stegabschnitten, diese um 2π/n voneinander beabstandet sind.

Nach einer Fortbildung der Erfindung ist vorgesehen, dass der erste und der zweite Stegabschnitt ferner jeweils einen gegenüber den Wandungsbereichen radial nach innen ragenden Abschnitt aufweist, der sich in Axialrichtung von der oberen Abkragung hin zur unteren Abkragung erstreckt.

Zudem kann dabei vorgesehen sein, dass die nach innen ragenden Abschnitte des ersten und zweiten Stegabschnitts die minimal radiale Ausdehnung des Hülsenkörpers definieren. In anderen Worten ragt also der radial nach innen ragende Abschnitt der mindestens zwei Stegabschnitte am weitesten innen. Diese nach innen ragenden Abschnitte werden oftmals in Verbindung mit einer entsprechenden Nut an einem durch die Dichthülse geführten Körpers für eine korrekte Positionierung der Dichthülse verwendet, haben aber dabei typischerweise gleichzeitig die Aufgabe, die unterschiedlichen Wandungsbereiche an einer Innenseite der Dichthülse fluidisch zu separieren.

Nach einer vorteilhaften Modifikation ist vorgesehen, dass die nach innen ragenden Abschnitte des ersten und zweiten Stegabschnitts in Radialrichtung versetzt, vorzugsweise stufenartig versetzt, von der oberen und der unteren Abkragung abgehen. Es gibt demnach -anders als am Außenumfang der Dichthülse- ein Unterschied in der radialen Position des nach innen ragenden Abschnitts eines zugehörigen Stegabschnitts und der nach innen ragenden Abschnitts der Abkragungen. Der Abschnitt der Stegabschnitte kann dabei von der Abkragung stufenartig radial nach innen vorspringen.

Vorzugsweise ist nach der Erfindung vorgesehen, dass der erste und der zweite Wandungsbereich, gegenüber dem radial nach innen ragenden Abschnitt der oberen und der unteren Abkragung und gegenüber dem radial nach innen ragenden Abschnitt des ersten und des zweiten Stegabschnitts radial nach außen abgesetzt ist, so dass der erste und der zweite Wandungsbereich in Radialrichtung nach außen, vorzugsweise stufenartig in Radialrichtung nach außen, zu diesen Elementen versetzt angeordnet ist.

Dadurch ist die Innenseite des Wandungsbereich -genau wie auf der Außenseitean seinen Kanten durch radial nach innen vorspringende Elemente eingefasst. So lässt sich auch hier, beim Durchführen eines entsprechend ausgeformten Körpers durch die Dichthülse, eine Kammer bilden, die durch die radial nach innen ragenden Abschnitte der Stegabschnitte und der Abkragungen sowie dem innenseitigen Wandungsbereich begrenzt ist.

Nach einer optionalen Modifikation der Erfindung kann vorgesehen sein, dass der mindestens eine radial verlaufende Durchgangskanal in jedem der Wandungsbereiche mit einem Filter versehen ist, um ein den Durchgangskanal zu durchströmendes Kühlfluid zu filtern.

Dies ist dahingehend von Vorteil, dass nun nicht mehr bereits gefiltertes Kühlfluid zugeführt werden muss, sondern die Filtrierung mittels der Dichthülse selbst stattfindet. Dies spart Bauteile und verringert somit den erforderlichen Bauraum.

Ferner kann vorgesehen sein, dass der Hülsenkörper die generelle Form eines Zylinders, eines Vierkants, eines Sechskants oder eines Vielecks aufweist, und/oder der Hülsenköper außerhalb der Stegabschnitte ein Schnittprofil in I-Form, in C-Form, in E-Form oder in U-Form aufweist.

Auch kann vorgesehen sein, dass die Einhüllende der Dichthülse oder des Hülsenkörpers die Form eines Zylinders, eines Vierkants, eines Sechskants oder eines Vielecks aufweist. Dadurch ist ein Zusammenwirken mit einer die Dichthülse umgebenden Versorgungshülse, die eine Innenausnehmung in einer der vorstehend genannten Formen aufweist, auf besonders einfache Art und Weise möglich.

Vorzugsweise ist nach der Erfindung vorgesehen, dass die Dichthülse den zu kühlenden Körper nur mit den nach innen ragenden Abschnitten der oberen und unteren Abkragung sowie mit den nach innen ragenden Abschnitten der Stegabschnitte kontaktiert, so dass zwischen dem zu kühlenden Körper und dem ersten Wandungsbereich eine erste Kammer zur Aufnahme von Kühlfluid und zwischen dem zu kühlenden Körper und dem zweiten Wandungsbereich eine zweite Kammer zur Aufnahme von Kühlfluid gebildet ist, und die erste Kammer und die zweite Kammer außer über eine Verbindung durch die Kühlfluidkanäle des zu kühlenden Körpers aufgrund der als Trennelement wirkenden Stegabschnitte fluidisch voneinander separiert sind.

Die fluidische Trennung wird dabei durch die Kontaktierung der Dichthülse mit dem zu kühlenden Körper erlangt. Strömt also ein Kühlfluid durch den Durchgang eines Wandungsbereichs radial nach innen, füllt sich die durch die nach innen ragenden Abschnitte von den Stegabschnitten und den Abkragungen gebildete Kammer, so dass Kühlfluid in die von der Kammer abgedeckte Öffnung des Kühlfluidkanals in dem zu kühlenden Körper einströmt.

Ähnliches gilt dann bei der anderen Kammer, die ebenfalls mit der Öffnung eines Kühlfluidkanals zusammenwirkt. Strömt dort thermisch erwärmtes Kühlfluid aus, sammelt es sich in seiner Kammer, die mitunter durch den dort angeordneten Wandungsbereich definiert ist und kann durch den Durchgangskanal abströmen. Da die mit den unterschiedlichen Öffnungen der Kühlfluidkanäle zusammenwirkenden Kammern fluidisch voneinander getrennt sind, kommt es nicht zu einer Durchmischung von unterschiedlich temperierten Kühlfluid, so dass die Kühlung des zu kühlenden Körpers sehr effektiv ist.

Nach einer optionalen Modifikation ist vorgesehen, dass die Dichtanordnung ferner mit einer an die Außenkontur der Dichthülse angepassten Versorgungshülse, die die Dichthülse umfangsseitig vollständig umschließt, und einem Kühlmittelzulauf und einem Kühlmittelablauf in der Versorgungshülse versehen ist, wobei die Dichthülse zur Versorgungshülse derart ausgerichtet ist, dass der Kühlmittelzulauf und der Kühlmittelablauf jeweils von einem jeweiligen Wandungsbereich überdeckt ist, die Dichthülse die Versorgungshülse nur mit den nach außen ragenden Abschnitten der oberen und unteren Abkragung sowie mit den nach außen ragenden Abschnitten der Stegabschnitte kontaktiert, so dass zwischen der Versorgungshülse und dem ersten Wandungsbereich eine erste Versorgungskammer zur Aufnahme von Kühlfluid und zwischen der Zuführhülse und dem zweiten Wandungsbereich eine zweite Versorgungskammer zur Aufnahme von Kühlfluid gebildet ist, und die erste Versorgungskammer und die zweite Versorgungskammer außer über eine Verbindung durch die Kühlfluidkanäle des zu kühlenden Körpers aufgrund der als Trennelement wirkenden Stegabschnitte fluidisch voneinander separiert sind.

Damit ist es auf besonders einfache Art und Weise möglich, eine Zu- bzw. Ableitung zu den Kühlfluidkanälen des zu kühlenden Körpers vorzusehen. Diese ist dabei auch noch sehr kompakt, da die Zu- wie auch die Ableitung von Kühlfluid in der Versorgungshülse nur umfangsseitig voneinander beabstandet sein muss und nicht auch in Längsrichtung der Versorgungshülse.

Ferner kann vorgesehen sein, dass der zu kühlende Körper für jede der nach innen radial abstehenden Stegabschnitte der Dichthülse eine entsprechende nutförmige Einkerbung zu dessen Aufnahme aufweist.

Damit kann eine einfache Montage der Dichthülse an einem zu kühlenden Körper erlangt werden, so dass ein Montagefehler bei der korrekten Ausrichtung von Dichthülse zu kühlenden Körper ausgeschlossen ist.

Die Erfindung betrifft zudem einen kühlbaren Kraftstoffinjektor mit einer Dichthülse nach einer der vorhergehenden Varianten oder eine Dichtanordnung nach einer der vorhergehenden Varianten.

Weitere Merkmale, Einzelheiten und Vorteile der Erfindung werden anhand der nachfolgenden Figurenbeschreibung ersichtlich. Dabei zeigen:
- Fig. 1:: eine perspektivische Ansicht der Dichthülse,
- Fig. 2:: eine Schnittansicht der Dichthülse,
- Fig. 3:: eine weitere Schnittansicht der Dichthülse durch die beiden Stegabschnitte,
- Fig. 4:: zwei Schnittansichten der Dichthülse nach einer weiteren Ausführungsform,
- Fig. 5:: eine Schnittansicht der erfindungsgemäßen Dichtanordnung,
- Fig. 6:: eine Draufsicht auf die erfindungsgemäße Dichtanordnung,
- Fig. 7:: eine Schnittansicht der erfindungsgemäßen Dichtanordnung nach einer weiteren Ausführungsform,
- Fig. 8:: eine Draufsicht auf die erfindungsgemäße Dichtanordnung nach der weiteren Ausführungsform,
- Fig. 9:: eine zu Fig. 5 bzw. Fig. 7 um 90° um die Längsachse der Dichtanordnung gedrehte Schnittansicht der erfindungsgemäßen Dichtanordnung,
- Fig. 10:: eine perspektivische Ansicht der erfindungsgemäßen Dichtanordnung in einem aufgeschnitten Zustand, und
- Fig. 11:: eine perspektivische Schnittansicht der erfindungsgemäßen Dichtanordnung nach der weiteren Ausführungsform.

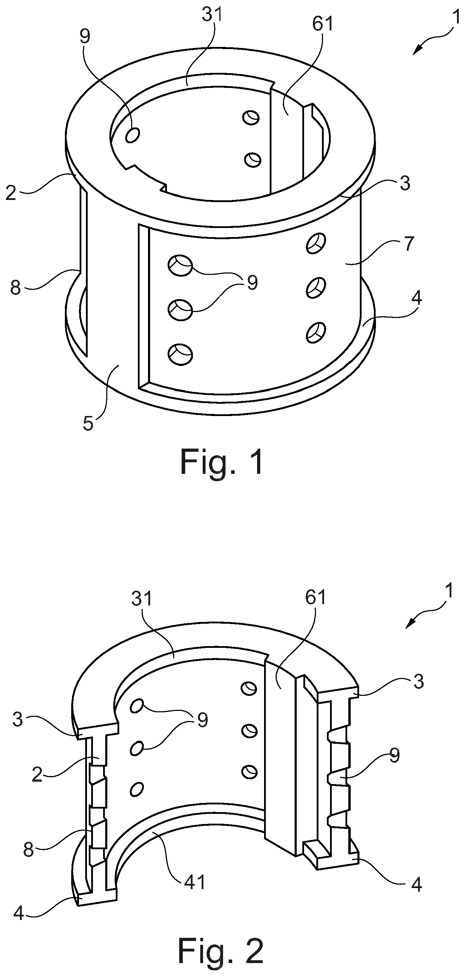

Fig. 1 zeigt eine perspektivische Ansicht der Dichthülse 1. Man erkennt die im Wesentlichen zylindrische Grundform des Hülsenkörpers 2. Die Einhüllende der Dichthülse ist in diesem Fall ein Zylinder.

Der Hülsenkörper 2 weist an seinem oberen und seinem unteren Längsende dabei jeweils eine nach außen abstehende Abkragung 3, 4 auf. Zudem gibt es zwei Stegabschnitte 4, 5, die die Abkragungen 3, 4 in Axialrichtung des Hülsenkörpers 2 miteinander verbinden. Dabei ist der Übergang von dem radial äußeren Bereich der Abkragungen 3, 4 zu den Stegabschnitten 4, 5 stufenlos oder glatt.

Radial zu den Abkragungen 3, 4 bzw. den Stegabschnitten 4, 5 nach innen versetzt ist ein erster Wandungsbereich 7 und ein zweiter Wandungsbereich 8 vorgesehen, der von jeweils mindestens einem Durchgangskanal 9 in Radialrichtung durchbrochen ist.

Auf der Innenseite der Hülse 1 stehen von den Wandungsbereichen 7, 8 radial nach innen auf Höhe der Abkragungen 3, 4 weitere Abschnitte 31, 41. Auch stehen radial nach innen an denselben Umfangspositionen wie den Stegabschnitten 5, 6 Abschnitte 51, 61 ab. Die von den Stegabschnitten 5, 6 nach innen abstehenden Abschnitte 51, 61 ragen dabei weiter ins Innere als die nach innen stehenden Abschnitte31, 41 der Abkragungen 3, 4. Die Oberseite der Dichthülse wie auch deren Unterseite kann dabei die Form einen Kreisrings aufweisen.

Fig. 2 zeigt eine Schnittansicht der in Fig. 1 erläuterten Dichthülse. Man erkennt, dass außerhalb der Stegabschnitte 5, 6 die Dichthülse 1 im Schnitt eine I-Form aufweist, die in der Darstellung lediglich durch die übereinandern angeordneten Durchgangskanäle 9 unterbrochen ist.

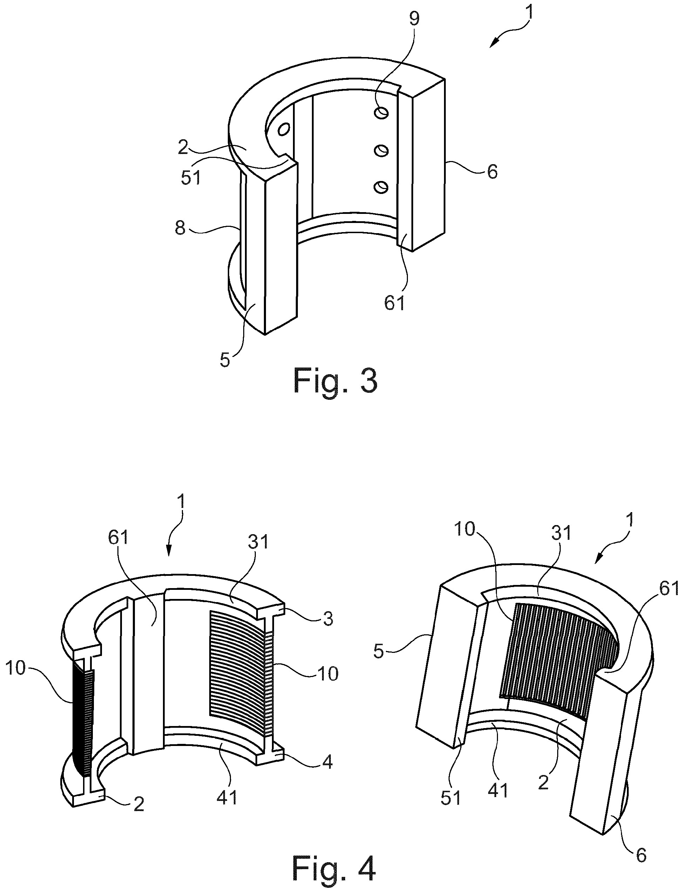

Fig. 3 zeigt ein dazu alternative Schnittansicht, welche durch die beiden gegenüberliegenden Stegabschnitte 5, 6 verläuft.

Fig. 4 zeigt zwei Schnittansichten einer weiteren Ausführungsform der Dichthülse 1, bei der anstelle einer Vielzahl von Durchgangskanälen 9 ein großflächiger Durchgangskanal mit einem Filter 10 vorgesehen ist. Der Filter kann dabei eine netzartige Struktur oder auch starr ausgebildet sein.

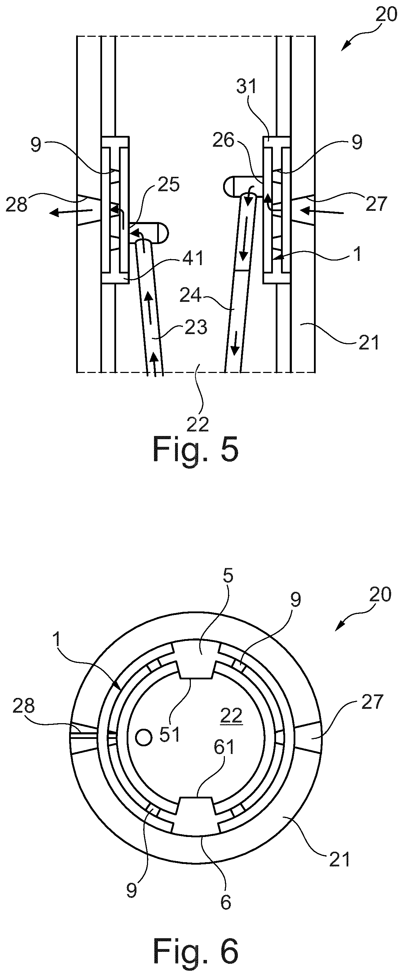

Fig. 5 zeigt eine Ansicht entlang eines Längsschnitts einer Dichtanordnung 20, die neben der Dichthülse 1 einen durch die Hülse 1 geführten Dichtkörper 22 und einen die Hülse 1 umfangsseitig umschließende Versorgungshülse 21 aufweist. Der zu kühlende Körper 22 weist dabei an den nach innen ragenden Abschnitten 51, 61 entsprechende Nuten auf, so dass diese Abschnitte 51, 61 wie auch die nach innen ragenden Abschnitte 31, 41 der Abkragungen 3, 4 an dem zu kühlenden Körper 22 vorzugsweise durchgängig in der Umfangsrichtung, anliegen.

Selbiges gilt für die Versorgungshülse 21, die an den nach außen abstehenden Elementen, nämlich den Abkragungen 3, 4 und den Stegabschnitten 3, 4 anliegt. Dadurch entstehen im Zwischenraum zwischen der Versorgungshülse 21 und der Dichthülse durch die Stegabschnitte 3, 4 umfangsseitig voneinander getrennte Kammern, die zum Einleiten oder Ausleiten von Kühlfluid in Kühlfluidkanäle 23, 24 genutzt werden können. Dazu sind die Öffnungen 25, 25 der Kühlfluidkanäle 23, 24 lediglich in einem Überdeckungsbereich mit einem zur Innenseite gerichteten Wandungsabschnitt anzuordnen. Eine beispielhafte Strömungsrichtung eines Kühlfluids ist anhand der Pfeile zu erkennen. Dabei wird zuerst kühles Kühlfluid eingeleitet und nach einem Kühlvorgang in seiner Temperatur erhöhtes Kühlfluid ausgegeben.

Fig. 6 ist eine Draufsicht auf die Dichtanordnung 20 aus Fig. 5.

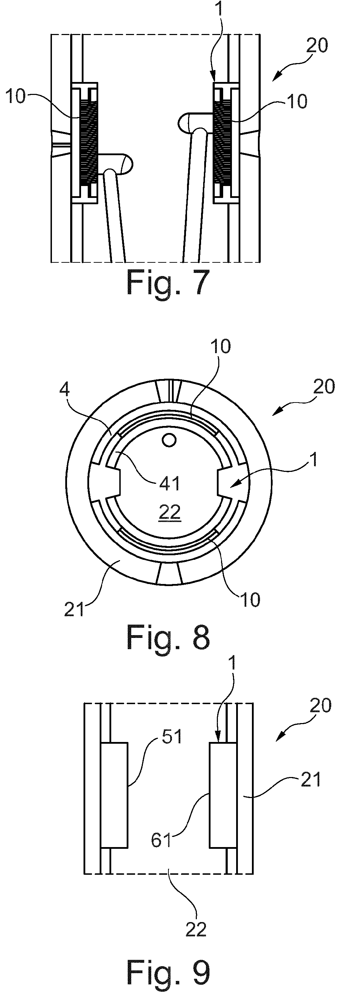

Fig. 7 ist eine Ansicht entlang eines Längsschnitts einer Dichtanordnung 20, bei der die Dichthülse anstatt mehrerer Durchgangskanäle 9 einen Filter 10 aufweist. Das Wirkprinzip gleicht aber dem aus der vorstehend beschriebenen Ausführungsform.

Fig. 8 ist eine Draufsicht auf die Dichtanordnung 20 aus Fig. 7.

Fig. 9 ist eine im Vergleich zu den Figs. 5 und 7 um 90° rotierte Ansicht um die Längsachse der Dichtanordnung 20. Man erkennt hier sehr gut, dass die nach innen ragenden Abschnitte 51, 61 mit entsprechenden nutförmigen Ausnehmungen des zu kühlenden Körpers zusammenwirken.

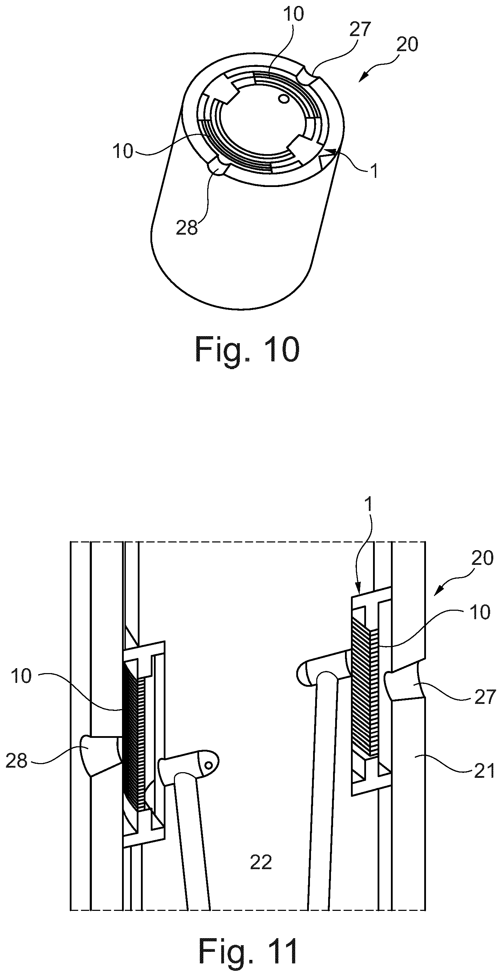

Fig. 10 ist eine perspektivische Ansicht einer aufgeschnittenen Dichtanordnung 20, die anstelle der Durchgangskanäle 9 einen Filter 10 in jedem der beiden Wandungsbereiche 7, 8 aufweist.

Fig. 11 zeigt ebenfalls eine Schnittansicht, ähnlich wie die der Fig. 5, nun jedoch mit einer Dichthülse, die einen Filter 10 anstelle der Durchgangskanäle 9 besitzt.

## Patentansprüche

1. Dichtanordnung (20) mit einer Dichthülse (1) zum separierten Zu- und Abführen eines Kühlmediums, wobei die Dichthülse (1) umfasst:
einen Hülsenkörper (2), der um seine Längsachse drehsymmetrisch ist,
eine zur Längsachse radial nach außen abstehende Abkragung (3) am oberen Längsende des Hülsenkörpers (2),
eine zur Längsachse radial nach außen abstehende Abkragung (4) am unteren Längsende des Hülsenkörpers (2),
einen ersten und einen zweiten Stegabschnitt (5, 6), von denen jeder in Axialrichtung des Hülsenkörpers (2) verläuft und die obere Abkragung (3) mit der unteren Abkragung (4) verbindet, und
einen ersten und einen zweiten Wandungsbereich (7, 8), von denen jeder in axialer Richtung durch die obere und untere Abkragung (3, 4) und in Umfangsrichtung durch den ersten und zweiten Stegabschnitt (5, 6) begrenzt ist, wobei
die obere Abkragung (3) und die untere Abkragung (4) jeweils durchgehend um den gesamten Umfang des Hülsenkörpers (2) verlaufen , und
der erste Wandungsbereich (7) und der zweite Wandungsbereich (8) jeweils mindestens einen radial verlaufenden Durchgangskanal (9) aufweist, um ein Kühlmedium radial zuzuführen oder abzuführen, und wobei
die Dichtanordnung (20) ferner umfasst:
einen zu kühlenden Körper, der sich durch das Innere der Dichthülse (1) hindurch erstreckt und einen ersten Kühlfluidkanal und einen zweiten Kühlfluidkanal aufweist, wobei
die Dichthülse (1) an dem zu kühlenden Körper so angeordnet ist, dass eine Öffnung des ersten Kühlfluidkanals von dem ersten Wandungsbereich (7) und eine Öffnung des zweiten Kühlfluidkanals von dem zweiten Wandungsbereich (8) überdeckt ist,
**dadurch gekennzeichnet, dass**
der erste Wandungsbereich (7) und der zweite Wandungsbereich (8) gegenüber der unteren Abkragung (3), der oberen Abkragung (4), dem ersten Stegabschnitt (5) und dem zweiten Stegabschnitt (6) radial nach innen abgesetzt ist,
die obere Abkragung (3) und die untere Abkragung (4) jeweils die maximale radiale Ausdehnung des Hülsenkörpers (2) definieren und
der erste und der zweite Stegabschnitt (5, 6) der Dichthülse (1) an ihren radial äußeren Seiten jeweils stufenfrei in die obere und untere Abkragung (3, 4) übergehen.

2. Dichtanordnung (20) nach einem der vorhergehenden Ansprüche, wobei die obere Abkragung (3) und die untere Abkragung (4) der Dichthülse (1) identisch ausgebildet sind und jeweils die maximale radiale Ausdehnung über den gesamten Umfang des Hülsenkörpers (2) definieren.

3. Dichtanordnung (20) nach einem der vorhergehenden Ansprüche, wobei die obere Abkragung (3) und die untere Abkragung (4) der Dichthülse (1) ferner jeweils einen gegenüber den Wandungsbereichen (7, 8) radial nach innen ragenden Abschnitt (31, 41) aufweist.

4. Dichtanordnung (20) nach einem der vorhergehenden Ansprüche, wobei der erste und der zweite Stegabschnitt (5, 6) der Dichthülse (1) ferner jeweils einen gegenüber den Wandungsbereichen (7, 8) radial nach innen ragenden Abschnitt (51, 61) aufweist, der sich in Axialrichtung von der oberen Abkragung (3) hin zur unteren Abkragung (4) erstreckt.

5. Dichtanordnung (20) nach dem vorhergehenden Anspruch 4, wobei die nach innen ragenden Abschnitte (51, 61) des ersten und zweiten Stegabschnitts (5, 6) der Dichthülse (1) die minimal radiale Ausdehnung des Hülsenkörpers (2) der Dichthülse (1) definieren.

6. Dichtanordnung (20) nach den vorhergehenden Ansprüchen 4 und 5, wobei die nach innen ragenden Abschnitte (51, 61) des ersten und zweiten Stegabschnitts (5, 6) der Dichthülse (1) in Radialrichtung stufenartig versetzt von der oberen und der unteren Abkragung (3, 4) abgehen.

7. Dichtanordnung (20) nach einem der vorhergehenden Ansprüche 3 - 6, wobei der erste und der zweite Wandungsbereich (7, 8) der Dichthülse (1), gegenüber dem radial nach innen ragenden Abschnitt (31, 41) der oberen und der unteren Abkragung (3, 4) und gegenüber dem radial nach innen ragenden Abschnitt (51, 61) des ersten und des zweiten Stegabschnitts (5, 6) radial nach außen abgesetzt sind, so dass der erste und der zweite Wandungsbereich (7, 8) stufenartig in Radialrichtung nach außen zu diesen Elementen (31, 41, 51, 61) versetzt angeordnet ist.

8. Dichtanordnung (20) nach einem der vorhergehenden Ansprüche, wobei der mindestens eine radial verlaufende Durchgangskanal (9) der Dichthülse (1) in jedem der Wandungsbereiche (7, 8) mit einem Filter (10) versehen ist, um ein den Durchgangskanal (9) zu durchströmendes Kühlfluid zu filtern.

9. Dichtanordnung (20) nach einem der vorhergehenden Ansprühe, wobei
der Hülsenkörper (2) der Dichthülse (1) die generelle Form eines Zylinders, eines Vierkants, eines Sechskants oder eines Vielecks aufweist, und/oder
der Hülsenköper der Dichthülse (1) außerhalb der Stegabschnitte (5, 6) ein Schnittprofil in I-Form, in C-Form, in E-Form oder in U-Form aufweist.

10. Dichtanordnung (20) nach einem der vorhergehenden Ansprüche ferner mit einer Dichthülse (1), die zumindest nach den Ansprüchen 3 und 4 ausgebildet ist, wobei
die Dichthülse (1) den zu kühlenden Körper nur mit den nach innen ragenden Abschnitten der oberen und unteren Abkragung (3, 4) sowie mit den nach innen ragenden Abschnitten der Stegabschnitte kontaktiert, so dass zwischen dem zu kühlenden Körper und dem ersten Wandungsbereich (7) eine erste Kammer zur Aufnahme von Kühlfluid und zwischen dem zu kühlenden Körper und dem zweiten Wandungsbereich (8) eine zweite Kammer zur Aufnahme von Kühlfluid gebildet ist, und
die erste Kammer und die zweite Kammer außer über eine Verbindung durch die Kühlfluidkanäle des zu kühlenden Körpers aufgrund der als Trennelement wirkenden Stegabschnitte (5, 6) fluidisch voneinander separiert sind.

11. Dichtanordnung (20) nach einem der vorhergehenden Ansprüche, ferner mit
einer an die Außenkontur der Dichthülse (1) angepassten Versorgungshülse, die die Dichthülse (1) umfangsseitig vollständig umschließt, und
einem Kühlmittelzulauf und einem Kühlmittelablauf in der Versorgungshülse, wobei
die Dichthülse (1) zur Versorgungshülse derart ausgerichtet ist, dass der Kühlmittelzulauf und der Kühlmittelablauf jeweils von einem jeweiligen Wandungsbereich (7, 8) überdeckt ist,
die Dichthülse (1) die Versorgungshülse nur mit den nach außen ragenden Abschnitten der oberen und unteren Abkragung (3, 4) sowie mit den nach außen ragenden Abschnitten der Stegabschnitte (5, 6) kontaktiert, so dass zwischen der Versorgungshülse und dem ersten Wandungsbereich (7) eine erste Versorgungskammer zur Aufnahme von Kühlfluid und zwischen der Zuführhülse und dem zweiten Wandungsbereich (8) eine zweite Versorgungskammer zur Aufnahme von Kühlfluid gebildet ist, und
die erste Versorgungskammer und die zweite Versorgungskammer außer über eine Verbindung durch die Kühlfluidkanäle des zu kühlenden Körpers aufgrund der als Trennelement wirkenden Stegabschnitte (5, 6) fluidisch voneinander separiert sind.

12. Dichtanordnung (20) nach einem der vorhergehenden Ansprüche, wobei der zu kühlende Körper für jede der nach innen radial abstehenden Stegabschnitte (5, 6) der Dichthülse (1) eine entsprechende nutförmige Einkerbung zu dessen Aufnahme aufweist.

13. Kühlbarer Kraftstoffinjektor mit einer Dichtanordnung (20) nach einem der vorhergehenden Ansprüche.

## Claims

1. A sealing arrangement (20) with a sealing sleeve (1) for the separated supply and discharge of a cooling medium, wherein the sealing sleeve (1) comprises:
a sleeve body (2) which is rotationally symmetrical about its longitudinal axis,
an upper protrusion (3) projecting radially outward with respect to the longitudinal axis at an upper longitudinal end of the sleeve body (2),
a lower protrusion (4) projecting radially outward with respect to the longitudinal axis at a lower longitudinal end of the sleeve body (2),
a first and a second web section (5, 6), each of which extends in the axial direction of the sleeve body (2) and connects the upper protrusion (3) to the lower protrusion (4), and
a first and a second wall region (7, 8), each of which is bounded in the axial direction by the upper and lower protrusions (3, 4) and in the circumferential direction by the first and second web sections (5, 6), wherein
the upper protrusion (3) and the lower protrusion (4) each extend continuously around the entire circumference of the sleeve body (2), and
the first wall region (7) and the second wall region (8) each have at least one radially extending passage channel (9) for radially supplying or discharging a cooling medium, and wherein
the sealing arrangement (20) further comprises:
a member to be cooled which extends through the interior of the sealing sleeve (1) and has a first cooling fluid channel and a second cooling fluid channel,
wherein the sealing sleeve (1) is arranged on the member to be cooled such that an opening of the first cooling fluid channel is covered by the first wall region (7) and an opening of the second cooling fluid channel is covered by the second wall region (8),
**characterized in that**
the first wall region (7) and the second wall region (8) are radially inwardly offset relative to the lower protrusion (3), the upper protrusion (4), the first web section (5) and the second web section (6),
the upper protrusion (3) and the lower protrusion (4) each define the maximum radial extent of the sleeve body (2), and
the first and second web sections (5, 6) of the sealing sleeve (1) merge seamlessly, at their radially outer sides, into the upper and lower protrusions (3, 4), respectively.

2. The sealing arrangement (20) according to one of the preceding claims, wherein the upper protrusion (3) and the lower protrusion (4) of the sealing sleeve (1) are of identical design and each define the maximum radial extent over the entire circumference of the sleeve body (2).

3. The sealing arrangement (20) according to one of the preceding claims, wherein the upper protrusion (3) and the lower protrusion (4) of the sealing sleeve (1) each further have a section (31, 41) projecting radially inward relative to the wall regions (7, 8).

4. The sealing arrangement (20) according to one of the preceding claims, wherein the first and second web sections (5, 6) of the sealing sleeve (1) each further have a section (51, 61) projecting radially inward relative to the wall regions (7, 8), which extends in the axial direction from the upper protrusion (3) toward the lower protrusion (4).

5. The sealing arrangement (20) according to the preceding claim 4, wherein the inwardly projecting sections (51, 61) of the first and second web sections (5, 6) of the sealing sleeve (1) define the minimum radial extent of the sleeve body (2).

6. The sealing arrangement (20) according to the preceding claims 4 and 5, wherein the inwardly projecting sections (51, 61) of the first and second web sections (5, 6) of the sealing sleeve (1) extend from the upper and lower protrusions (3, 4) in a stepwise offset manner in the radial direction.

7. The sealing arrangement (20) according to one of the preceding claims 3 to 6, wherein the first and second wall regions (7, 8) of the sealing sleeve (1) are radially outwardly offset relative to the radially inwardly projecting sections (31, 41) of the upper and lower protrusions (3, 4) and relative to the radially inwardly projecting sections (51, 61) of the first and second web sections (5, 6), such that the first and second wall regions (7, 8) are arranged offset outwardly in a stepwise manner in the radial direction relative to these elements (31, 41, 51, 61).

8. The sealing arrangement (20) according to one of the preceding claims, wherein the at least one radially extending passage channel (9) of the sealing sleeve (1) in each of the wall regions (7, 8) is provided with a filter (10) for filtering a cooling fluid flowing through the passage channel (9).

9. The sealing arrangement (20) according to one of the preceding claims, wherein
the sleeve body (2) of the sealing sleeve (1) has the general shape of a cylinder, a square, a hexagon or a polygon, and/or
the sleeve body of the sealing sleeve (1), outside the web sections (5, 6), has a cross-sectional profile of I-shape, C-shape, E-shape or U-shape.

10. The sealing arrangement (20) according to one of the preceding claims, further comprising a sealing sleeve (1) configured at least according to claims 3 and 4, wherein
the sealing sleeve (1) contacts the member to be cooled only with the inwardly projecting sections of the upper and lower protrusions (3, 4) and with the inwardly projecting sections of the web sections, such that a first chamber for receiving cooling fluid is formed between the member to be cooled and the first wall region (7) and a second chamber for receiving cooling fluid is formed between the member to be cooled and the second wall region (8), and
the first chamber and the second chamber are fluidically separated from one another, apart from a connection through the cooling fluid channels of the member to be cooled, due to the web sections (5, 6) acting as separating elements.

11. The sealing arrangement (20) according to one of the preceding claims, further comprising
a supply sleeve adapted to the outer contour of the sealing sleeve (1), which completely surrounds the sealing sleeve (1) circumferentially, and
a coolant inlet and a coolant outlet in the supply sleeve, wherein
the sealing sleeve (1) is oriented relative to the supply sleeve such that the coolant inlet and the coolant outlet are each covered by a respective wall region (7, 8),
the sealing sleeve (1) contacts the supply sleeve only with the outwardly projecting sections of the upper and lower protrusions (3, 4) and with the outwardly projecting sections of the web sections (5, 6), such that a first supply chamber for receiving cooling fluid is formed between the supply sleeve and the first wall region (7) and a second supply chamber for receiving cooling fluid is formed between the supply sleeve and the second wall region (8), and
the first supply chamber and the second supply chamber are fluidically separated from one another, apart from a connection through the cooling fluid channels of the member to be cooled, due to the web sections (5, 6) acting as separating elements.

12. The sealing arrangement (20) according to one of the preceding claims, wherein the member to be cooled has, for each of the radially inwardly projecting web sections (5, 6) of the sealing sleeve (1), a corresponding groove-shaped recess for receiving the respective web section.

13. A coolable fuel injector having a sealing arrangement (20) according to one of the preceding claims.

## Revendications

1. Dispositif d'étanchéité (20) avec une douille d'étanchéité (1) destinée à l'amenée et à l'évacuation séparées d'un fluide de refroidissement, la douille d'étanchéité (1) comprenant :
un corps de douille (2) qui est symétrique de révolution autour de son axe longitudinal,
une saillie en porte-à-faux (3) s'étendant radialement vers l'extérieur par rapport à l'axe longitudinal à l'extrémité longitudinale supérieure du corps de douille (2),
une saillie en porte-à-faux (4) s'étendant radialement vers l'extérieur par rapport à l'axe longitudinal à l'extrémité longitudinale inférieure du corps de douille (2),
une première et une seconde section de nervure (5, 6), dont chacune s'étend dans la direction axiale du corps de douille (2) et relie la saillie supérieure (3) à la saillie inférieure (4), et
une première et une seconde zone de paroi (7, 8), dont chacune est délimitée dans la direction axiale par la saillie supérieure et la saillie inférieure (3, 4) et dans la direction circonférentielle par la première et la seconde section de nervure (5, 6), dans lequel
la saillie supérieure (3) et la saillie inférieure (4) s'étendent chacune de manière continue sur toute la circonférence du corps de douille (2), et
la première zone de paroi (7) et la seconde zone de paroi (8) comportent chacune au moins un canal de passage (9) s'étendant radialement afin d'amener ou d'évacuer radialement un fluide de refroidissement, et
le dispositif d'étanchéité (20) comprenant en outre :
un corps à refroidir qui s'étend à travers l'intérieur de la douille d'étanchéité (1) et présente un premier canal de fluide de refroidissement et un second canal de fluide de refroidissement,
la douille d'étanchéité (1) étant disposée sur le corps à refroidir de telle sorte qu'une ouverture du premier canal de fluide de refroidissement est recouverte par la première zone de paroi (7) et qu'une ouverture du second canal de fluide de refroidissement est recouverte par la seconde zone de paroi (8),
**caractérisé en ce que**
la première zone de paroi (7) et la seconde zone de paroi (8) sont décalées radialement vers l'intérieur par rapport à la saillie inférieure (3), à la saillie supérieure (4), à la première section de nervure (5) et à la seconde section de nervure (6),
la saillie supérieure (3) et la saillie inférieure (4) définissent chacune l'extension radiale maximale du corps de douille (2), et
la première et la seconde section de nervure (5, 6) de la douille d'étanchéité (1) passent chacune, sur leurs côtés radialement extérieurs, de manière continue et sans gradins dans la saillie supérieure et la saillie inférieure (3, 4).

2. Dispositif d'étanchéité (20) selon l'une des revendications précédentes, dans lequel la saillie supérieure (3) et la saillie inférieure (4) de la douille d'étanchéité (1) sont réalisées de manière identique et définissent chacune l'extension radiale maximale sur toute la circonférence du corps de douille (2).

3. Dispositif d'étanchéité (20) selon l'une des revendications précédentes, dans lequel la saillie supérieure (3) et la saillie inférieure (4) de la douille d'étanchéité (1) comportent chacune en outre une section (31, 41) faisant saillie radialement vers l'intérieur par rapport aux zones de paroi (7, 8).

4. Dispositif d'étanchéité (20) selon l'une des revendications précédentes, dans lequel la première et la seconde section de nervure (5, 6) de la douille d'étanchéité (1) comportent chacune en outre une section (51, 61) faisant saillie radialement vers l'intérieur par rapport aux zones de paroi (7, 8) et s'étendant dans la direction axiale depuis la saillie supérieure (3) vers la saillie inférieure (4).

5. Dispositif d'étanchéité (20) selon la revendication 4, dans lequel les sections (51, 61) faisant saillie vers l'intérieur de la première et de la seconde section de nervure (5, 6) de la douille d'étanchéité (1) définissent l'extension radiale minimale du corps de douille (2) de la douille d'étanchéité (1).

6. Dispositif d'étanchéité (20) selon les revendications 4 et 5, dans lequel les sections (51, 61) faisant saillie vers l'intérieur de la première et de la seconde section de nervure (5, 6) de la douille d'étanchéité (1) sont décalées par paliers dans la direction radiale par rapport à la saillie supérieure et à la saillie inférieure (3, 4).

7. Dispositif d'étanchéité (20) selon l'une des revendications 3 à 6, dans lequel la première et la seconde zone de paroi (7, 8) de la douille d'étanchéité (1) sont décalées radialement vers l'extérieur par rapport à la section (31, 41) faisant saillie vers l'intérieur de la saillie supérieure et de la saillie inférieure (3, 4) et par rapport à la section (51, 61) faisant saillie vers l'intérieur de la première et de la seconde section de nervure (5, 6), de sorte que la première et la seconde zone de paroi (7, 8) sont disposées avec un décalage par paliers dans la direction radiale vers l'extérieur par rapport à ces éléments (31, 41, 51, 61).

8. Dispositif d'étanchéité (20) selon l'une des revendications précédentes, dans lequel le au moins un canal de passage (9) s'étendant radialement de la douille d'étanchéité (1) est pourvu, dans chacune des zones de paroi (7, 8), d'un filtre (10) afin de filtrer un fluide de refroidissement s'écoulant à travers le canal de passage (9).

9. Dispositif d'étanchéité (20) selon l'une des revendications précédentes, dans lequel
le corps de douille (2) de la douille d'étanchéité (1) présente la forme générale d'un cylindre, d'un carré, d'un hexagone ou d'un polygone, et/ou
le corps de douille de la douille d'étanchéité (1) présente, en dehors des sections de nervure (5, 6), un profil de section en forme de I, de C, de E ou de U.

10. Dispositif d'étanchéité (20) selon l'une des revendications précédentes, comprenant en outre une douille d'étanchéité (1) réalisée au moins selon les revendications 3 et 4, dans lequel
la douille d'étanchéité (1) n'est en contact avec le corps à refroidir qu'au moyen des sections faisant saillie vers l'intérieur de la saillie supérieure et de la saillie inférieure (3, 4) ainsi que des sections faisant saillie vers l'intérieur des sections de nervure, de sorte qu'une première chambre destinée à recevoir un fluide de refroidissement est formée entre le corps à refroidir et la première zone de paroi (7), et qu'une seconde chambre destinée à recevoir un fluide de refroidissement est formée entre le corps à refroidir et la seconde zone de paroi (8), et
la première chambre et la seconde chambre sont séparées l'une de l'autre sur le plan fluidique, à l'exception d'une liaison par les canaux de fluide de refroidissement du corps à refroidir, en raison des sections de nervure (5, 6) agissant comme éléments de séparation.

11. Dispositif d'étanchéité (20) selon l'une des revendications précédentes, comprenant en outre
une douille d'alimentation adaptée au contour extérieur de la douille d'étanchéité (1), laquelle entoure complètement la douille d'étanchéité (1) sur le plan circonférentiel, et
une entrée de fluide de refroidissement et une sortie de fluide de refroidissement dans la douille d'alimentation,
la douille d'étanchéité (1) étant orientée par rapport à la douille d'alimentation de telle sorte que l'entrée de fluide de refroidissement et la sortie de fluide de refroidissement soient chacune recouvertes par une zone de paroi (7, 8) correspondante,
la douille d'étanchéité (1) n'étant en contact avec la douille d'alimentation qu'au moyen des sections faisant saillie vers l'extérieur de la saillie supérieure et de la saillie inférieure (3, 4) ainsi que des sections faisant saillie vers l'extérieur des sections de nervure (5, 6), de sorte qu'une première chambre d'alimentation destinée à recevoir un fluide de refroidissement est formée entre la douille d'alimentation et la première zone de paroi (7), et qu'une seconde chambre d'alimentation destinée à recevoir un fluide de refroidissement est formée entre la douille d'alimentation et la seconde zone de paroi (8), et
la première chambre d'alimentation et la seconde chambre d'alimentation étant séparées l'une de l'autre sur le plan fluidique, à l'exception d'une liaison par les canaux de fluide de refroidissement du corps à refroidir, en raison des sections de nervure (5, 6) agissant comme éléments de séparation.

12. Dispositif d'étanchéité (20) selon l'une des revendications précédentes, dans lequel le corps à refroidir comporte, pour chacune des sections de nervure (5, 6) de la douille d'étanchéité (1) faisant saillie radialement vers l'intérieur, une entaille correspondante en forme de rainure destinée à leur réception.

13. Injecteur de carburant refroidissable comprenant un dispositif d'étanchéité (20) selon l'une des revendications précédentes.
